# EUROPEAN PATENT APPLICATION

(11) **EP 3 040 934 A1**
(43) Date of publication of application: **06.07.2016**
(21) Application number: 14841143.2
(22) Date of filing: 12.08.2014
(51) Int. Cl.: G06Q 50/02, G06F 13/00

(54) **REMOTE SERVER**

(30) Priority: 28.08.2013 JP 2013176842
(71) Applicant: Yanmar Co., Ltd., Osaka-shi, Osaka 530-8311 (JP)
(72) Inventor: OUCHIDA, Takeshi, Osaka-shi Osaka 5308311 (JP)
(74) Representative: Jostarndt, Hans-Dieter
(86) International application number: PCT/JP2014/071319
(87) International publication number: WO 2015/029776

(57) **Abstract**

An object of the invention is to provide a remote server that can obtain a distribution of revenue and expenditure in a farm field. There is provided a remote server (5) that receives position information, information on a harvest amount, information on an applying amount of a fertilizer, and information on an instantaneous fuel consumption amount. The remote server (5) calculates a revenue/expenditure distribution map (55) by a total of the revenue and expenditure, using a distribution of the harvest amount in a working area as the revenue and a distribution of the instantaneous fuel consumption amount as the expenditure based on position information of a tractor (3) in one farm field, and using a distribution of the applying amount of the fertilizer and the instantaneous fuel consumption amount as the expenditure based on position information of a combine harvester (4).

## Description

### TECHNICAL FIELD

The present invention relates to a technique of a remote server that obtains a distribution of revenue and expenditure in a farm field.

### BACKGROUND ART

Remote servers provide service to remote users. In recent years, there are attempts to, even after marketing an agricultural machine, remotely monitor an operating status of the agricultural machine with a remote server and to provide maintenance information and the like to a user.

Conventionally, a configuration of a combine harvester that obtains a harvest amount is known (Patent Literature 1, for example). According to the above remote server, it is also possible to monitor an operating status of the combine harvester and to obtain a distribution of the harvest amount in a farm field. The distribution of the harvest amount in a farm field is a classification of areas based on a magnitude of the harvest amount.

However, in the farm field, revenue of the harvest amount is accompanied by expenditure of an applying amount of a fertilizer or an instantaneous fuel consumption amount of a tractor or a working combine harvester which are working, for example. In evaluating the farm field, obtaining the distribution of revenue and expenditure in the farm field by considering not only the revenue of the harvest amount but also the expenditure of the applying amount of the fertilizer or the instantaneous fuel consumption amount will lead to the improvement of evaluation accuracy at the time of evaluating productivity in the farm field.

### CITATION LIST

### PATENT LITERATURE

PTL1: JP 2006-246849 A

### SUMMARY OF INVENTION

### TECHNICAL PROBLEM

An object of the present invention is to provide a remote server that can obtain a distribution of revenue and expenditure in a farm field.

### SOLUTIONS TO PROBLEM

The remote server of the present invention receives position information, information on a harvest amount, information on an applying amount of a fertilizer, and information on an instantaneous fuel consumption amount. The remote server outputs a distribution of the harvest amount, a distribution of the applying amount of the fertilizer, and a distribution of the instantaneous fuel consumption amount in a working area, based on the position information.

### ADVANTAGEOUS EFFECTS OF INVENTION

According to the remote server of the present invention, the distribution of the harvest amount in the farm field can be compared with the distribution of the applying amount of the fertilizer or the distribution of the instantaneous fuel consumption amount in the farm field, and thus the distribution of the revenue and expenditure in the farm field can be obtained.

### BRIEF DESCRIPTION OF DRAWINGS

FIG. 1 is a schematic diagram showing a configuration of a remote server system.
FIG. 2 is another schematic diagram showing a configuration of a remote server system.
FIG. 3 is a schematic diagram showing a map of a distribution of revenue and expenditure.
FIG. 4 is a flowchart of a control of obtaining the distribution of the revenue and expenditure.

### DESCRIPTION OF EMBODIMENTS

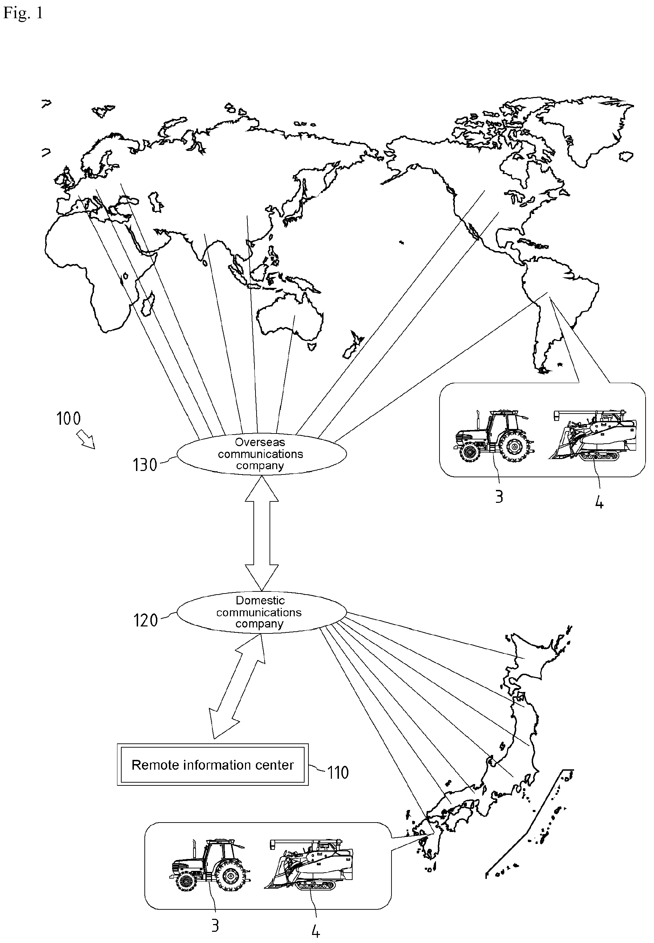

A remote server system 100 will be described with reference to FIG. 1.

FIG. 1 schematically shows the remote server system 100.

The remote server system 100 is a system relating to a remote server according to an embodiment of the present invention. The remote server system 100 is a system that provides service to remote users. The remote server system 100 of the present embodiment is a system that provides service from a remote information center 110 to users who use tractors 3 and combine harvesters 4 as agricultural machines, via an overseas communications company 130 in each country of the world and a domestic communications company 120.

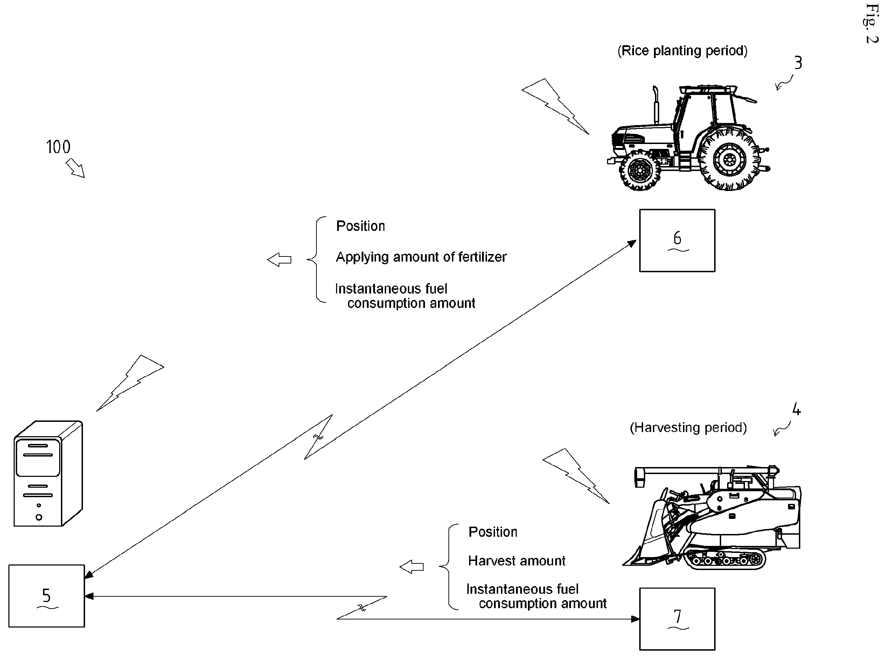

The remote server system 100 will be further described with reference to FIG. 2.

FIG. 2 schematically shows the remote server system 100.

The remote server system 100 is configured such that a remote server 5 provided in the remote information center 110 (refer to FIG. 1) and terminal servers 6 provided in the tractors 3 or terminal servers 7 provided in combine harvesters 4 can communicate with each other.

The remote server 5 is configured to be able to simultaneously communicate with a plurality of terminal servers. For example, the remote server 5 is configured to be able to communicate with terminal servers 6 provided in tractors 3 or with terminal servers 7 provided in combine harvesters 4 in other farm fields.

In the present embodiment, it is assumed that before a rice planting period or before a harvesting period in one farm field, a terminal server 6 of the tractor 3 that is applying a fertilizer to the farm field transmits at least a position of the tractor 3, an applying amount of the fertilizer, and an instantaneous fuel consumption amount, to the remote server 5.

It is assumed that in one farm field, during a harvesting period, a terminal server 7 of a combine harvester 4 that is performing harvesting work in the farm field transmits at least a position of the combine harvester 4, a harvest amount, and an instantaneous fuel consumption amount, to the remote server 5.

The remote server 5 prepares a revenue/expenditure distribution map 55 to be described later for one farm field, based on the information on the harvest amount, the information on the applying amount of the fertilizer, and the information on the instantaneous fuel consumption amount of the tractor 3 or the combine harvester 4, transmitted by the terminal server 6 or the terminal server 7.

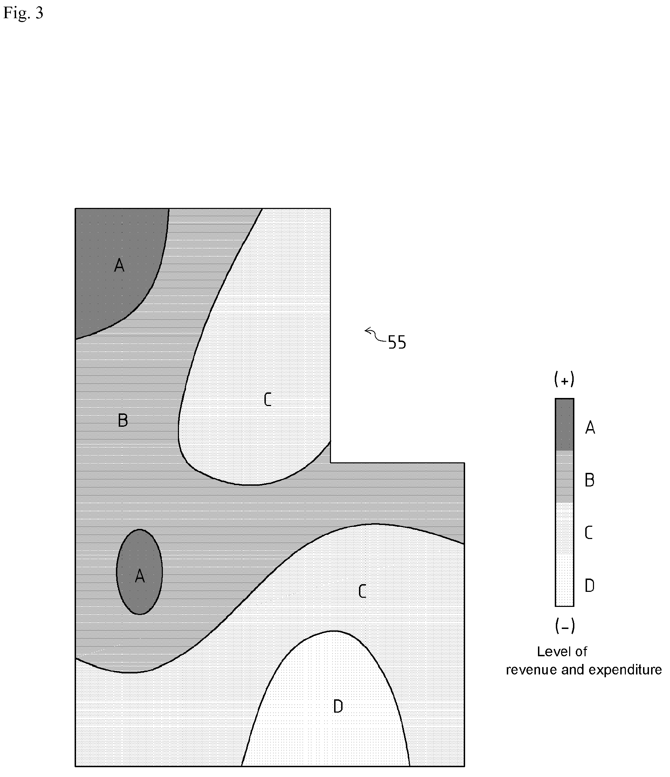

The revenue/expenditure distribution map 55 will be described with reference to FIG. 3.

FIG. 3 schematically shows the revenue/expenditure distribution map 55.

The revenue/expenditure distribution map 55 is a map showing a distribution of revenue and expenditure in one farm field during one year, for example. The revenue and expenditure is a total of revenue and expenditure associated with agricultural production. In the present embodiment, the revenue is the harvest amount by the combine harvester 4. The expenditure is the fuel consumption amount of the tractor 3, the amount of the fertilizer applied by the tractor 3, and the fuel consumption amount of the combine harvester 4.

In the revenue/expenditure distribution map 55, in order to obtain the total of the revenue and expenditure, the amount of the fertilizer, the harvest amount, and the fuel consumption amount are calculated by converting the amounts into market prices.

The revenue/expenditure distribution map 55 shows the distribution of revenue and expenditure in one farm field as a map in plan view. In the revenue/expenditure distribution map 55 of the present embodiment, areas are classified based on levels of revenue and expenditure in one farm field. The levels of revenue and expenditure are classified into four stages of A, B, C, and D in the order of the larger revenue relative to the expenditure in the revenue and expenditure in the areas of the farm field. In the revenue/expenditure distribution map 55, the revenue and expenditure level of each area is shown by gradation.

The area of the revenue and expenditure level A is an area where revenue is larger than expenditure. For example, in this area, the fuel consumption amount of the tractor 3, the amount of the fertilizer applied by the tractor 3, and the fuel consumption amount of the combine harvester 4 are small, but the harvest amount by the combine harvester 4 is large.

The area of the revenue and expenditure level D is an area where revenue is smaller than expenditure. For example, in this area, the fuel consumption amount of the tractor 3, the amount of the fertilizer applied by the tractor 3, and the fuel consumption amount of the combine harvester 4 are large, but the harvest amount by the combine harvester 4 is small.

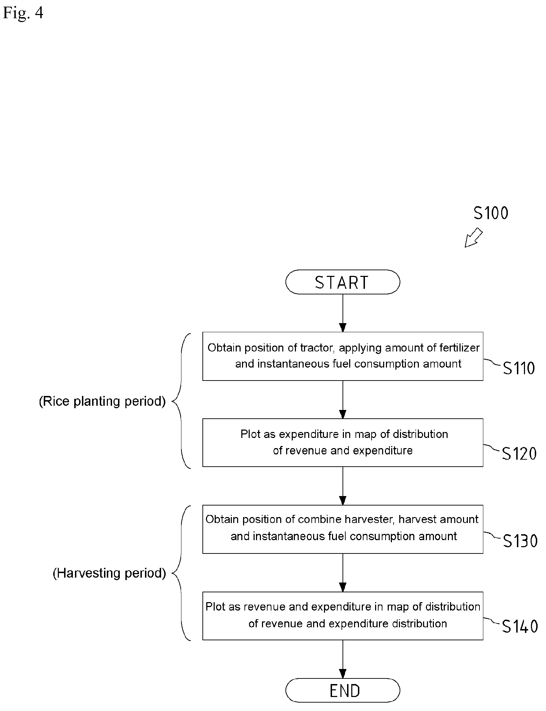

A flow of a revenue/expenditure distribution obtaining control S100 will be described with reference to FIG. 4.

FIG. 4 is a flowchart showing the flow of the revenue/expenditure distribution obtaining control S100.

The revenue/expenditure distribution obtaining control S100 is a control of obtaining the revenue/expenditure distribution map 55, from a work result in one farm field during one year.

In step S110 and step S120, the remote server 5 prepares the revenue/expenditure distribution map 55 of the expenditure generated when the tractor 3 performs the applying work of the fertilizer in the farm field before the rice planting period or before the harvesting period.

In step S110, the remote server 5 obtains the position of the tractor 3, the applying amount of the fertilizer, and the instantaneous fuel consumption amount. More specifically, the remote server 5 obtains the position of the tractor 3, the applying amount of the fertilizer, and the instantaneous fuel consumption amount during a predetermined cycle, and calculates an average of the applying amount of the fertilizer and an average of the instantaneous fuel consumption amount in a predetermined area (a coordinate position of the revenue/expenditure distribution map 55).

In step S120, the remote server 5 converts the average of the applying amount of the fertilizer and the average of the instantaneous fuel consumption amount that are calculated in step S110 into market prices, and plots the market prices as expenditure at the coordinate position of the revenue/expenditure distribution map 55.

In step S130 and step S140, the remote server 5 prepares the revenue/expenditure distribution map 55 of the revenue and expenditure generated when the combine harvester 4 performs the harvesting work in the farm field during a harvesting period. In this case, the harvest amount by the combine harvester 4 is the revenue, and the instantaneous fuel consumption amount of the combine harvester 4 is the expenditure.

In step S130, the remote server 5 obtains the position of the combine harvester 4, the harvest amount, and the instantaneous fuel consumption amount. More specifically, the remote server 5 obtains the position of the combine harvester 4, the harvest amount, and the instantaneous fuel consumption amount during a predetermined cycle, and calculates an average of the harvest amount and an average of the instantaneous fuel consumption amount at the coordinate position.

In step S140, the remote server 5 converts the average of the harvest amount and the average of the instantaneous fuel consumption amount calculated in step S130 into market prices, and plots the market prices as revenue or expenditure at the coordinate position of the revenue/expenditure distribution map 55.

In this way, the remote server 5 can prepare the revenue/expenditure distribution map 55 of one farm field during one year. The prepared revenue/expenditure distribution map 55 is provided to the user, and is to be utilized for a production schedule and the like for the next year and afterward in one farm field.

Effects of the remote server system 100 and the revenue/expenditure distribution obtaining control S100 will be described.

According to the remote server system 100 and the revenue/expenditure distribution obtaining control S100, the distribution of the revenue and expenditure in a farm field can be obtained.

In the present embodiment, in preparing the revenue/expenditure distribution map 55 of one farm field, work of the tractor 3 and the combine harvester 4 as agricultural machines is used as a target. However, the present invention is not limited thereto. For example, work of the rice planting machine or the chemical application machine as an agricultural machine may be used as the target.

Further, in the present embodiment, for one farm field, the revenue/expenditure distribution map 55 is prepared based on the work result data during one year. However, the present invention is not limited thereto. For example, the revenue/expenditure distribution map 55 may be prepared based on all of past accumulated data.

Further, in the present embodiment, the revenue/expenditure distribution map 55 of one farm field is prepared. However, the present invention is not limited thereto. For example, the map of the harvest amount showing only the revenue, or the map of the applying amount of the fertilizer or the map of the fuel consumption amount showing only the expenditure may be prepared.

### INDUSTRIAL APPLICABILITY

The present invention can be utilized for a remote server.

### REFERENCE SIGNS LIST

- 3: Tractor
- 4: Combine harvester
- 5: Remote server
- 6: Terminal server
- 7: Terminal server
- 55: Revenue/expenditure distribution map
- 100: Remote server system

## Claims

1. A remote server that receives position information, information on a harvest amount, information on an applying amount of a fertilizer, and information on an instantaneous fuel consumption amount, wherein
the remote server outputs a distribution of the harvest amount, a distribution of the applying amount of the fertilizer, and a distribution of the instantaneous fuel consumption amount in a working area, based on the position information.
